# EUROPEAN PATENT SPECIFICATION

(11) **EP 3 943 742 B1**
(45) Date of publication and mention of the grant of the patent: **27.12.2023**
(21) Application number: 20794237.6
(22) Date of filing: 17.02.2020
(51) Int. Cl.: F02M 35/104, B62K 11/00, B62M 7/02, F02B 29/04, F02B 37/00, F02M 35/10, F02M 35/16, B62J 40/10, F02B 27/00

(54) **STRADDLED VEHICLE**
SATTELFAHRZEUG
VÉHICULE DU TYPE À SELLE

(30) Priority: 24.04.2019 JP 2019083161
(43) Date of publication of application: 26.01.2022
(73) Proprietor: Yamaha Hatsudoki Kabushiki Kaisha, Iwata-shi, Shizuoka 438-8501 (JP)
(72) Inventor: MAKITA, Naoki, Iwata-shi, Shizuoka 438-8501 (JP); SATO, Hayatoshi, Iwata-shi, Shizuoka 438-8501 (JP); TORIGOSHI, Masaki, Iwata-shi, Shizuoka 438-8501 (JP)
(74) Representative: Stöckeler, Ferdinand
(86) International application number: PCT/JP2020/005971
(87) International publication number: WO 2020/217656

(56) References cited:
- DE-A1- 10 118 490
- DE-A1-102016 012 769
- JP-A- 2001 295 712
- JP-A- 2017 210 896
- US-A- 4 254 746
- US-A- 4 417 559
- US-A- 5 551 387
- US-A1- 2018 105 227

## Description

### Technical Field

The present teaching relates to a straddled vehicle, and more particularly relates to a straddled vehicle including an engine with a plurality of combustion chambers, and a turbocharger.

### Background Art

There have been straddled vehicles such as motorcycles. A straddled vehicle is a vehicle of which posture is controlled by operation of an acceleration operator. Therefore, such a straddled vehicle is required to have an engine output that is changed in accordance with operation of the acceleration operator, that is, the engine of such a straddled vehicle is required to have improved response characteristics to operation of the acceleration operator.

In recent years, straddled vehicles with a turbocharger have been suggested as has been disclosed in Japanese Patent Application Publication 2015-74986. Such straddled vehicles with a turbocharger also are required to have an improvement in the response characteristics of the engine.

In order to improve the response characteristics of the engine, Japanese Patent Application Publication 2015-74986 suggests a straddled vehicle including: a supercharger that compresses air sucked in for combustion; an intercooler that cools the air compressed by the supercharger; a surge tank that sends the air from the intercooler to a throttle body; a connecting pipe connecting the supercharger to the intercooler; a bypath pipe connecting a middle portion of the connecting pipe to the surge tank; and a control valve that is positioned in the bypath pipe to open and close the bypath pipe.

US 4 417 559 A discloses a supercharger apparatus for an internal combustion engine. An intake passage member comprises a compressor and a pre-chamber on the downstream side of the compressor. A first intake passage couples a first cylinder of the internal combustion engine with the pre-chamber and a second intake passage couples a second cylinder of the internal combustion engine with the pre-chamber. A first throttle valve is arranged in the first intake passage and a second throttle valve is arranged in the second intake passage.

US 2018/105227 A1 and DE 10 2016 012769 A1 teach saddle-ridden vehicles including a supercharger.

### Citation List

### Patent Literature

Patent Literature 1: Japanese Patent Application Publication No. 2015-74986

### Summary of Invention

### Technical Problem

In the straddled vehicle disclosed in Japanese Patent Application Publication No. 2015-74986, a bypath that circuits around the intercooler is provided. Thus, the invention of Japanese Patent Application Publication No. 2015-74986 requires such an additional passage (bypath).

An object of the present teaching is to provide a straddled vehicle that includes an engine with a plurality of combustion chambers, and a turbocharger, in which the engine has improved response characteristics to operation of the acceleration operator.

### Solution to Problem

In order to attain the object, the present inventors considered providing a plurality of throttle valves for a plurality of combustion chambers on a one-to-one basis. However, the inventors noticed that it is difficult to make enough space for the plurality of throttle valves and that providing a plurality of throttle valves will lead to an increase in the weight of the straddled vehicle.

Then, the present inventors considered providing a single throttle valve commonly used for all the plurality of combustion chambers. As a result, the present inventors obtained a new finding as follows: when there is not provided a surge tank, which serves as a reservoir temporarily reserving intake air, between the single throttle valve and the plurality of combustion chambers, and specifically, when the inner volume of the collector of an intake manifold is reduced, the response characteristics of the engine, especially the response characteristics in the non-supercharging region of the engine, to operation of the acceleration operator is improved. The present teaching is based on this finding.

A straddled vehicle according to an embodiment of the present teaching includes an engine, a supercharger, an intake passageway, and a throttle valve. The engine has a plurality of combustion chambers. The intake passageway defines an intake passage in which intake air sucked in from atmosphere flows to each of the combustion chambers. The throttle valve is positioned in the intake passageway. The supercharger is positioned upstream from the throttle valve with respect to a direction of flow of intake air in the intake passageway. The intake passageway includes a downstream-side intake passageway. The downstream-side intake passageway is positioned downstream from the throttle valve with respect to the direction of flow of intake air in the intake passageway. The downstream-side intake passageway includes a plurality of branch intake passageways, and a single common intake passageway. The plurality of branch intake passageways is provided for the plurality of combustion chambers on a one-to-one basis in such a manner that branch intake passages defined by the respective branch intake passageways lead to the corresponding combustion chambers. The single common intake passageway is connected to the respective upstream ends of the plurality of branch intake passageways with respect to the direction of flow of intake air in the intake passageway in such a manner that a single common intake passage defined by the single common intake passageway leads to each of the branch intake passages defined by the respective branch intake passageways. The inner volume of the single common intake passageway is smaller than the total inner volume of the plurality of branch intake passageways.

In the straddled vehicle according to the embodiment, the inner volume of the downstream-side intake passageway, and especially the inner volume of the single common intake passageway is small, and therefore, the response characteristics of the engine, especially the response characteristics in the non-supercharging region of the engine, to operation of the acceleration operator can be improved.

The straddled vehicle according to the embodiment is, for example, a vehicle with a saddle type seat. The straddled vehicle, for example, includes at least one front wheel and at least one rear wheel. The straddled vehicle is not limited to a two-wheeled vehicle, and the straddled vehicle may be a three-wheeled vehicle with a pair of front or rear wheels or a four-wheeled vehicle with a pair of front wheels and a pair of rear wheels. For example, the straddled vehicle may be a scooter, a moped, a snowmobile, a watercraft, an ATV (all terrain vehicle), or the like. The straddled vehicle may be a leaning vehicle, for example. A leaning vehicle means a vehicle having a leaning vehicle body that leans leftward when the vehicle turns left and leans rightward when the vehicle turns right.

In the straddled vehicle according to the embodiment, each of the plurality of combustion chambers of the engine may include, for example, a main combustion chamber and a sub combustion chamber connected to the main combustion chamber. The engine with a plurality of combustion chambers is, for example, an engine with a plurality of cylinders. Two adjacent cylinders of the plurality of cylinders may be connected to each other. When the engine has a plurality of cylinders, the combustion chambers are provided for the cylinders on a one-to-one basis. There are no particular limitations to the positions of the plurality of cylinders. For example, the engine with a plurality of cylinders may be, for example, a V-type engine, an inline engine, or a horizontally opposed engine. The engine may be a forward-tilted engine having forward-tilted cylinder axes or a backward-tilted engine having backward-tilted cylinder axes. The engine may be, for example, a water-cooled engine, an oil-cooled engine, or an air-cooled engine. The air-cooled engine may be a naturally air-cooled engine or a forcedly air-cooled engine. The engine may be, for example, a reciprocating engine or a rotary engine.

In the straddled vehicle according to the embodiment, the supercharger is positioned upstream from the throttle valve with respect to the direction of flow of intake air in the intake passageway, and there are no other particular limitations to the supercharger. The supercharger is, for example, to compress the air sucked in from the atmosphere, thereby increasing the pressure of the intake air. For example, the supercharger may be an exhaust gas turbine supercharger (turbocharger) or a mechanical supercharger. The exhaust gas turbine supercharger, for example, includes a turbine that is rotated by an exhaust gas exhausted from the plurality of combustion chambers of the engine, and a compressor that rotates along with the rotation of the turbine. The mechanical supercharger, for example, includes a compressor that is driven along with rotation of the engine.

In the straddled vehicle according to the embodiment, the intake passageway defines an intake passage in which the air sucked in from the atmosphere flows to each of the plurality of combustion chambers, and there are no other particular limitations to the intake passageway. The intake passage is a space in which the intake air flows. The intake passageway is a structure including walls and other components that form the space in which the intake air flows. The intake passageway, for example, includes part of the engine and a pipe connected to the part of the engine. In other words, the intake passageway may be partly constructed by some members connected to part of the engine. Thus, the intake passageway may include an outer intake passageway that is connected to the engine and defines an outer intake passage that is a part of the intake passage in which the intake air sucked in from the atmosphere flows to each of the plurality of combustion chambers. In other words, the intake passageway may be partly constructed by the engine.

In the straddled vehicle according to the embodiment, the throttle valve is positioned in the intake passageway, and there are no other particular limitations to the throttle valve. The throttle valve, for example, may be mechanically connected to the acceleration operator contained in the straddled vehicle and accordingly movable along with operation of the acceleration operator. Alternatively, operation of the acceleration operator contained in the straddled vehicle may be converted into an electric signal, and the throttle valve may be moved in accordance with the electric signal. The throttle valve may be positioned in the intake passageway, for example, in such a manner to be rotatable around a predetermined rotation axis so as to adjust the amount of intake air flowing toward the plurality of combustion chambers. The predetermined rotation axis, for example, extends in a direction perpendicular to the direction of flow of intake air in the intake passageway. For example, the throttle valve is positioned in the intake passageway while being fixed to a rotation shaft that is rotatable relative to the intake passageway. Thereby, the throttle valve can be positioned in such a manner to be rotatable around the rotation axis of the rotation shaft. The amount of intake air flowing toward the combustion chambers can be adjusted by a change of the open/close state of the intake passageway caused by a rotation of the throttle valve around the rotation axis. The throttle valve may be fixed to the rotation shaft by any means. For example, a screw or the like is used as the means of fitting the throttle valve to the rotation shaft. The shape of the throttle valve is designed, for example, according to the internal shape of the intake passageway where the throttle valve is positioned.

In the straddled vehicle according to the embodiment, the downstream-side intake passageway is positioned downward from the throttle valve with respect to the direction of flow of intake air in the intake passageway, and there are no other particular limitations to the position of the downstream-side intake passageway. The phrase "downstream from the throttle valve" means, for example, downstream from the position of the rotation axis of the throttle valve. The downstream-side intake passageway includes a plurality of branch intake passageways and a single common intake passageway, and there are no other particular limitations to the structure of the downstream-side intake passageway.

In the straddled vehicle according to the embodiment, the plurality of branch intake passageways is provided for the plurality of combustion chambers on a one-to-one basis in such a manner that branch intake passages defined by the respective branch intake passageways lead to the corresponding combustion chambers, and there are no other particular limitations to the plurality of branch intake passageways. The branch intake passages are spaces in which the intake air flows. Each of the branch intake passageways is a structure including walls and other components that form a space in which the intake air flows. The plurality of branch intake passageways may have the same inner volume or may have different inner volumes. The branch intake passages defined by the respective branch intake passageways may have the same length or may have different lengths. The plurality of branch intake passageways may have the same cross-sectional area of space or may have different cross-sectional areas of space. The inner volume of a branch intake passageway means the size of the space in which the intake air flows, that is, the size of the branch intake passage defined by the branch intake passageway. Each of the branch intake passageways, for example, includes part of the engine and a pipe connected to the part of the engine. Thus, each of the branch intake passageways may be partly constructed by a member connected to the engine. Thus, each of the branch intake passageways may be at least partly constructed by the engine.

In the straddled vehicle according to the embodiment, the single common intake passageway is connected to the respective upstream ends of the plurality of branch intake passageways with respect to the direction of flow of intake air in the intake passageway, and defines a single common intake passage that leads to the branch intake passages defined by the respective branch intake passageways. There are no other particular limitations to the single common intake passageway. The single common intake passage is a space in which the intake air flows. The single common intake passageway is a structure including walls and other components that form the space in which the intake air flows. The upstream end of the single common passageway is, for example, at the place where the throttle valve is positioned.

In the straddled vehicle according to the embodiment, the inner volume of the single common intake passageway is smaller than the total inner volume of the plurality of branch intake passageways. The inner volume of the single common intake passageway is the size of the space in which the intake air flows, that is, the size of the single common intake passage defined by the single common intake passageway. The total inner volume of the plurality of branch intake passageways is the sum of the sizes of the spaces in which the intake air flows, that is, the sum of the sizes of the branch intake passages.

The inner volume of the single common intake passageway is, for example, smaller than a half of the total volume of the branch intake passageways, and preferably, smaller than a quarter of the total volume of the branch intake passageways. It is more desirable that the inner volume of the single common intake passageway is smaller than one fifth of the total volume of the branch intake passageways.

In the straddled vehicle according to the embodiment, the inner volume of the single common intake passageway may be, for example, smaller than the average inner volume of the plurality of branch intake passageways. This arrangement makes it possible to decrease the inner volume of the downstream-side intake passageway and especially the inner volume of the single common intake passageway, and accordingly, it becomes possible to improve the response characteristics of the engine to operation of the acceleration operator of the straddled vehicle.

In the straddled vehicle according to the embodiment, the inner volume of the single common intake passageway may be, for example, smaller than any of the branch intake passageways. This arrangement makes it possible to decrease the inner volume of the downstream-side intake passageway and especially the inner volume of the single common intake passageway, and accordingly, it becomes possible to improve the response characteristics of the engine to operation of the acceleration operator of the straddled vehicle.

In the straddled vehicle according to the embodiment, the inner volume of the single common intake passageway may be, for example, smaller than the smallest one of the inner volumes of the respective branch intake passageways. This arrangement makes it possible to decrease the inner volume of the downstream-side intake passageway and especially the inner volume of the single common intake passageway, and accordingly, it becomes possible to improve the response characteristics of the engine to operation of the acceleration operator of the straddled vehicle. When the plurality of branch intake passageways have the same inner volume, the inner volume of each of the branch intake passageways is considered as the smallest one of the inner volumes of the respective branch intake passageways.

In the straddled vehicle according to the embodiment, the length of the single common intake passage is preferably smaller than the length of any of the branch intake passages.

In any of these cases, the inner volume of the single common passageway becomes smaller than the total inner volume of the plurality of branch intake passageways.

The length of the single common passage is, for example, smaller than a half of the length of any of the branch intake passages. Preferably, the length of the single common passage is smaller than a quarter of the length of any of the branch intake passages. It is more desirable that the length of the single common intake passage is smaller than one fifth of the length of any of the branch intake passages.

The straddled vehicle according to the embodiment further includes an intercooler. The intercooler is positioned in the intake passageway, between the supercharger and the throttle valve with respect to the direction of flow of intake air in the intake passageway.

With this arrangement, the air compressed by the supercharger can be cooled. Thereby, the density of air supplied to the engine is heightened, and the efficiency of air intake is improved.

In the straddled vehicle according to the embodiment, the intercooler cools the air compressed by the supercharger, and there are no other particular limitations to the intercooler. The intercooler may be an air-cooled intercooler or a water-cooled intercooler. When the intercooler is an air-cooled intercooler, the intercooler is positioned at a place as that is blown by wind while the straddled vehicle is travelling. When the intercooler is a water-cooled intercooler, the intercooler includes a coolant passageway in which a coolant for cooling the air compressed by the supercharger flows. When a water-cooled intercooler is used, a sub-radiator is provided to cool the coolant. The coolant is different from a coolant for cooling a water-cooled engine. The sub-radiator is positioned, for example, at a place that is blown by wind while the straddled vehicle is travelling.

In the straddled vehicle according to the embodiment, the plurality of branch intake passages preferably have the same length.

In this case, for example, when the cross-sectional areas of space of the respective branch intake passageways are the same, the same amount of air can be introduced into the respective combustion chambers. The cross-sectional area of space of a branch intake passageway means the internal area of the branch intake passageway when the branch intake passageway is cut in a direction perpendicular to the direction of flow of intake air in the branch intake passageway, that is, the area of the opening portion of a cross section of the branch intake passageway.

Some embodiments of the present teaching will hereinafter be described in detail with reference to the drawings, and the detailed description of the embodiments will provide a clearer picture of the above-mentioned object and other objects, the features, the aspects and the advantages of the present teaching.

The term "and/or" used herein includes one of the associated items in a list and all possible combinations of the associated items.

### Effect of Invention

The present teaching allows a straddled vehicle including an engine with a plurality of combustion chambers and a turbocharger to improve in the response characteristics of the engine to operation of the acceleration operator of the straddled vehicle.

### Brief Description of Drawings

[FIG. 1] FIG. 1 is a diagram including a right side view of a straddled vehicle according to an embodiment of the present teaching, a schematic diagram of the engine, the intake passageway and the exhaust passageway of the straddled vehicle, and a schematic diagram of a downstream-side intake passageway, which is a downstream part of the intake passageway.
[FIG. 2] FIG. 2 is a right side view of the engine of the straddled vehicle shown in FIG. 1.
[FIG. 3] FIG. 3 is a front view of the engine of the straddled vehicle shown in FIG. 1.
[FIG. 4] FIG. 4 is a perspective view of an outer downstream-side intake passageway, which is a part of an outer intake passageway connected to the engine of the straddled vehicle.
[FIG. 5] FIG. 5 is a schematic diagram of the outer downstream-side intake passageway, which is a part of an outer intake passageway connected to the engine of the straddled vehicle.
[FIG. 6] FIG. 6 is a graph showing results of examination of the response characteristics in the non-supercharging region of the engine to operation of the acceleration operator in the straddled vehicle according to the embodiment of the present teaching.
[FIG. 7] FIG. 7 is a graph showing results of examination of the response characteristics in the non-supercharging region of the engine to operation of the acceleration operator in a straddled vehicle in which throttle valves are provided for a plurality of combustion chambers on a one-to-one basis.

### Description of Embodiments

A straddled vehicle according to an embodiment of the present teaching will hereinafter be described in detail with reference to the drawings. The embodiment described below is merely an example. The present teaching shall not be understood to be limited to the embodiment below.

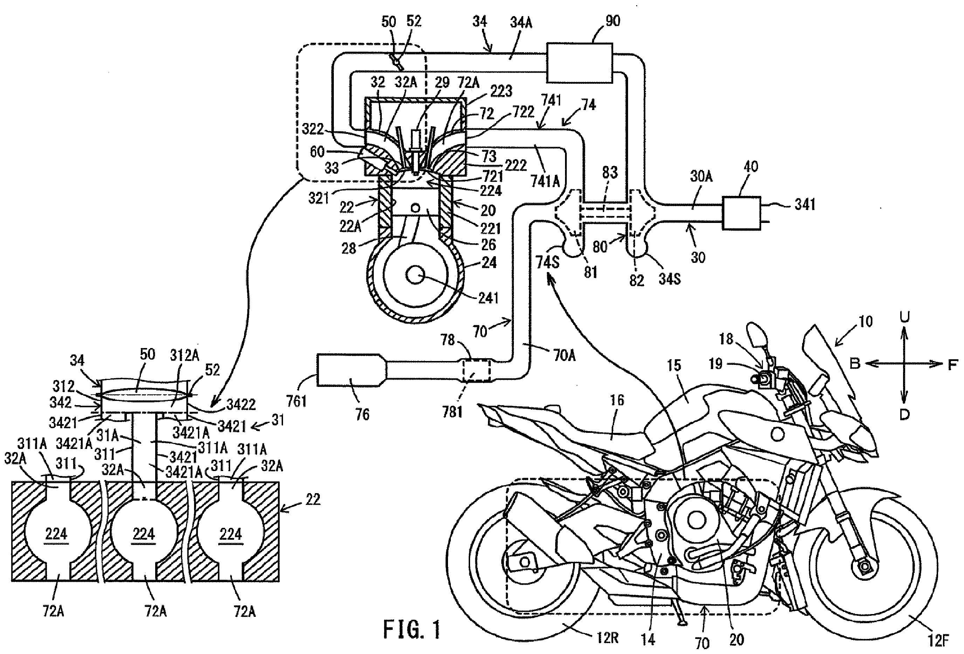

With reference to FIG. 1, a straddled vehicle 10 according to an embodiment of the present teaching will be described. FIG. 1 shows a right side view of the straddled vehicle 10, a schematic diagram of an engine 20, an intake passageway 30 and an exhaust passageway 70, and a schematic diagram of a downstream-side intake passageway 31, which is a part of the intake passageway 30. The schematic diagram of the engine 20, the intake passageway 30 and the exhaust passageway 70 in FIG. 1 shows a place where the intake passageway 30 and the exhaust passageway 70 are connected to one of a plurality of cylinders 22 contained in the engine 20.

In the present specification, directions relative to the straddled vehicle 10 are defined as follows.

Forward, frontward or the front of the straddled vehicle 10 is referred to as vehicle-forward, vehicle-frontward or the vehicle-front F. Backward, rearward or the back of the straddled vehicle 10 is referred to as vehicle-backward, vehicle-rearward or the vehicle-back B. Leftward or the left of the straddled vehicle 10 is referred to as vehicle-leftward or the vehicle left L. Rightward or the right of the straddled vehicle 10 is referred to as vehicle-rightward or the vehicle right R. Upward, higher or above the straddled vehicle 10 is referred to as vehicle-upward, vehicle-higher or vehicle-above U. Downward, lower or below the straddled vehicle 10 is referred to as vehicle-downward, vehicle-lower or vehicle-below D. The forward-and-backward direction relative to the straddled vehicle 10 is referred to as Vehicle-Front-Back Direction FB. The leftward-and-rightward direction relative to the straddled vehicle 10 is referred to as Vehicle-Left-Right Direction LR. The upward-and-downward direction relative to the straddled vehicle 10 is referred to as Vehicle-Up-Down Direction UD. Forward, frontward or the front of the straddled vehicle 10, backward, rearward or the back of the straddled vehicle 10, leftward or the left of straddled vehicle 10, rightward or the right of the straddled vehicle 10, upward, higher or above the straddled vehicle 10, and downward, lower or below the straddled vehicle 10 are forward, frontward or the front, backward, rearward or the back, leftward or the left, rightward or the right, upward, higher or above, and downward, lower or below, respectively, from the perspective of a rider sitting on a seat 16 of the straddled vehicle 10.

In this specification, a shaft or a member that extends in the forward-and-backward direction does not necessarily mean a shaft or a member that extends parallel and in line with the forward-and-backward direction. A shaft or a member that extends in the forward-and-backward direction may include a shaft or a member that is inclined from the forward-and-backward direction in the leftward or rightward direction or the upward or downward direction at an angle within ±45 degrees. In a similar way, a shaft or a member that extends in the upward-and-downward direction may include a shaft or a member that is inclined from the upward-and-downward direction in the forward or backward direction or the leftward or rightward direction at an angle within ±45 degrees. A shaft or a member that extends in the leftward-and-rightward direction may include a shaft or a member that is inclined from the leftward-and-rightward direction in the forward or backward direction or the upward or downward direction at an angle within ±45 degrees.

When two arbitrary members described in the present specification are defined as a first member and a second member, respectively, the relationship between these two members are as follows. The first member and the second member are components of the straddled vehicle 10.

In the present specification, the first member is entirely positioned more frontward than the second member means the following: the entire first member is positioned more frontward than the plane that passes the front end of the second member and is perpendicular to the forward-and-backward direction. In this case, the first member and the second member are not necessarily arranged in line in the forward-and-backward direction. This definition applies to other directions as well as the forward-and-backward direction.

In the present specification, a statement that the first member is positioned more frontward than the second member means the following: at least part of the first member is positioned within the area of the range of movement of the second member during a translation of the second member in the forward direction. Accordingly, the first member may be positioned entirely within the area that the second member passes during a translation of the second member in the forward direction, or part of the first member may protrude from the area that the second member passes during a translation in the forward direction. In this case, the first member and the second member are arranged in line in the forward-and-backward direction. This definition applies to other directions as well as the forward-and-backward direction.

The straddled vehicle 10 is a motorcycle, which is a leaning vehicle. The straddled vehicle 10 includes a front wheel 12F, a rear wheel 12R, a vehicle body frame 14, a seat 16, and a handlebar 18.

The front wheel 12F is supported by the vehicle body frame 14. From a view looking to the vehicle-left L or vehicle-right R, the front wheel 12F is entirely positioned more frontward than the engine 20. The front wheel 12F is steered by operation of the handlebar 18. Thus, the front wheel 12F is the steerable wheel.

The rear wheel 12R is supported by the vehicle body frame 14. From a view looking to the vehicle-left L or vehicle-right R, the rear wheel 12R is entirely positioned more backward than the engine 20. The rear wheel 12R is rotated by the force transmitted from the engine 20. Thus, the rear wheel 12R is the drive wheel.

The seat 16 is supported by the vehicle body frame 14. A rider, for example, sits on the seat 16 and drives the straddled vehicle 10.

The straddled vehicle 10 includes an air cleaner 40, a throttle valve 50, a plurality of injectors 60, an exhaust passageway 70, a turbocharger 80 serving as a supercharger, and an intercooler 90, in addition to the engine 20 and the intake passageway 30. These will be described below.

The engine 20 is an inline engine in which a plurality of cylinders (in this embodiment, three) is arranged in line in Vehicle-Left-Right Direction LR. Accordingly, the engine 20 has a plurality of (in this embodiment, three) combustion chambers 224. The engine 20 is a four-stroke engine. A four-stroke engine repeats an intake step, a compression step, a combustion step (an expansion step) and an exhaust step. In the four-stroke engine, the intake step, compression step, combustion step (expansion step) and exhaust step are defined as one cycle.

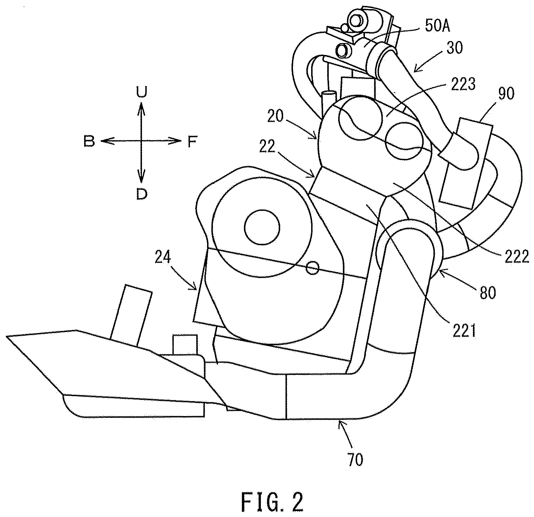

With reference to FIG. 2, the engine 20 will be described in more detail. FIG. 2 is a right side view of the engine 20.

The engine 20 includes a plurality of (in this embodiment, three) cylinders 22, and a crank case 24. These will be described in more detail.

The plurality of cylinders 22 are connected to the upper end part of the crank case 24. The plurality of cylinders 22 are arranged in line in Vehicle-Left-Right Direction LR.

In the present embodiment, the plurality of cylinders 22 are formed integrally. Specifically, the components of the plurality of cylinders 22 are formed as a one-piece body.

Each of the plurality of cylinders 22 includes a cylinder body 221, a cylinder head 222, and a head cover 223. These will be described below.

The cylinder body 221 is connected to the upper end part of the crank case 24. The cylinder head 222 is connected to the upper end part of the cylinder body 221. The head cover 223 is connected to the upper end part of the cylinder head 222.

As shown in FIG. 1, a cylinder hole 22A is formed in the cylinder body 221. A piston 26 is placed in the cylinder hole 22Ain such a manner as to be freely slidable. The piston 26 is connected to a crankshaft 241 via a connecting rod 28.

A combustion chamber 224 is formed in the cylinder 22. The combustion chamber 224 is defined by the bottom face of the cylinder head 222, the cylinder hole 22A, and the top face of the piston 26. In other words, the cylinder hole 22A defines part of the combustion chamber 224, and the combustion chamber 224 is formed between the bottom face of the cylinder head 222 and the top face of the piston 24.

A spark plug 29 is positioned with its tip inside the combustion chamber 224. The tip of the spark plug 29 generates spark discharge. This spark discharge ignites a gas mixture in the combustion chamber 224. The gas mixture is a mixture of intake air and fuel.

The crank case 24 encases the crankshaft 241. The crank case 24 is connected to the lower end parts of the respective cylinders 22.

As shown in FIG. 1, the intake passageway 30 defines an intake passage 30Ain which air sucked in from the atmosphere flows to each of the plurality of combustion chambers 224. The intake passage 30A is a space in which the intake air flows. The intake passageway 30 is a structure including walls and other components that form the space in which the intake air flows.

The intake passageway 30 includes a plurality of (in this embodiment, three) inner intake passageways 32, and an outer intake passageway 34. These will be described below.

The plurality of inner intake passageways 32 are parts of the intake passageway 30. Each of the plurality of inner intake passageways 32 defines an inner intake passage 32A that is a part of the intake passage 30A. Each of the plurality of inner intake passageways 32 is formed by part of the corresponding cylinder head 222. In other words, each inner intake passage 32A, which is a part of the intake passage 30A, is formed in the cylinder head 222 of the corresponding cylinder 22. The space formed by each of the inner intake passageways 32, that is, the space in which the intake air flows is connected to the corresponding one of the combustion chambers 224. Thus, the inner intake passages 32A, which are parts of the intake passage 30A and are formed by the respective inner intake passageways 32, are connected to the corresponding combustion chambers 224.

A combustion chamber air inlet 321 is formed on the surface defining the combustion chamber 224 of the cylinder head 222 of each of the plurality of cylinder 22. The combustion-chamber air inlet 321 is located at the downstream end of the corresponding one of the inner intake passageways 32. An air inlet 322 is formed on the outer surface of the cylinder head 222 of each of the cylinders 22. The air inlet 322 is located at the upstream end of the corresponding one of the inner intake passageways 32. For each of the combustion chambers 224, only one combustion-chamber air inlet 321 or a plurality of combustion-chamber air inlets 321 may be formed. In the present embodiment, only one combustion-chamber air inlet 321 is formed for each of the combustion chambers 224.

An intake valve 33 that opens and closes the combustion-chamber air inlet 321 is positioned in each of the inner intake passages 32A defined by the respective inner intake passageways 32. One intake valve 33 is provided for each of the combustion-chamber air inlets 321. In other words, intake valves 33 are provided for the combustion-chamber air inlets 321 on a one-to-one basis. The intake valve 33 is driven by a valve actuator (not shown) positioned in the cylinder head 222 of the corresponding one of the plurality of cylinders 22. The valve actuator moves along with the crankshaft 241.

The outer intake passageway 34 is a part of the intake passageway 30. The outer intake passageway 34 defines an outer intake passage 34Athat is a part of the intake passage 30A. The outer intake passageway 34 is connected to each of the inner intake passageways 32. Accordingly, the downstream end part of the outer intake passageway 34 diverges. The downstream end part of the outer intake passageway 34 diverges into branch tubes that are connected to the respective parts of the cylinder heads 222 of the cylinders 22, i.e., to the respective inner intake passageways 32. The outer intake passageway 34 has an atmospheric air inlet 341 that is open to the atmosphere. The atmospheric air inlet 341 is at the upstream end of the outer intake passageway 34. Air is sucked in from the atmosphere through the atmospheric air inlet 341. The air sucked in the outer intake passageway 34 through the atmospheric air inlet 341 is supplied to the engine 20. The outer intake passageway 34 will be described in more detail later.

The air cleaner 40 is positioned in the outer intake passageway 34. The air cleaner 40 cleans the air sucked in through the atmospheric air inlet 341. Thus, the air supplied to the engine 20 is air that already passed through the air cleaner 40, that is, air that is already cleaned by the air cleaner 40.

The throttle valve 50 is positioned in the intake passageway 30. Specifically, the throttle valve 50 is positioned in the outer intake passageway 34 of the intake passageway 30. The throttle valve 50 is positioned downstream from the air cleaner 40 with respect to the direction of flow of intake air in the outer intake passageway 34. In the present embodiment, the throttle valve 50 is positioned in a throttle body 50A, which constructs part of the outer intake passageway 34.

The throttle valve 50 is positioned in the intake passage 30A defined by the intake passageway 30. Specifically, the throttle valve 50 is positioned in the outer intake passage 34A defined by the outer intake passageway 34 of the intake passageway 30.

Only one throttle valve 50 is provided for all the plurality of combustion chambers 224. In other words, the throttle valve 50 is a common throttle valve for the plurality of combustion chambers 224. Thus, the throttle valve 50 is one single throttle valve.

The throttle valve 50 is positioned in the outer intake passage 34A in such a manner as to be rotatable around a specified rotation axis to adjust the amount of intake air flowing toward the plurality of combustion chambers 224. The rotation axis extends in a direction perpendicular to the direction of flow of intake air in the intake passageway 30. The throttle valve 50 is positioned in the outer intake passageway 34A while being fixed to a rotation shaft 52 that is positioned in such a manner to be rotatable relative to the outer intake passageway 34. The adjustment of the amount of intake air flowing toward the plurality of combustion chambers 224 is implemented, for example, by changing the open/close state of the outer intake passageway 34 in accordance with the rotation of the throttle valve 50 around the rotation axis. The throttle valve is fixed to the rotation shaft 52, for example, by a screw or the like.

The straddled vehicle 10 further includes an acceleration operator 19. The acceleration operator 19 is attached to the handlebar 18.

The throttle valve 50 works along with operation of the acceleration operator 19. Specifically, when the acceleration operator 19 is rotated in a particular direction (which will hereinafter be referred to as first direction), the throttle valve 50 is moved in such a manner to increase the amount of intake air flowing in the outer intake passage 34A. When the acceleration operator 19 is rotated in a direction opposite to the first direction (which will hereinafter be referred to as second direction), the throttle valve 50 is moved in such a manner to decrease the amount of intake air flowing in the outer intake passage 34A. Thus, the throttle valve 50 adjusts the amount of intake air flowing in the outer intake passage 34A in accordance with operation of the acceleration operator 19. The degree of opening of the throttle valve 50 is adjusted in accordance with the degree of rotation in the first direction of the acceleration operator 19.

The plurality of injectors 60 spray fuel into the corresponding one of the combustion chambers 224. Specifically, each of the plurality of injectors 60 sprays fuel into the intake air supplied to the corresponding one of the combustion chambers 224. In other words, the plurality of injectors 60 spray fuel toward the intake air, which already passed through the air cleaner 40 and the intercooler 90 positioned in the outer intake passageway 34 of the intake passageway 30.

The plurality of injectors 60 are positioned in the cylinder heads 222 of the respective cylinders 22 on a one-to-one basis. Thus, the plurality of injectors 60 are arranged in such a manner that one injector 60 is provided for each of the combustion chambers 224.

The straddled vehicle 10 further includes a fuel tank 15. The injectors 60 are connected to a fuel pump (not shown) positioned in the fuel tank 15. The fuel pump pumps the fuel in the fuel tank 15 to the injectors 60.

The exhaust passageway 70 defines an exhaust passage 70Ain which exhaust gas emitted from the combustion chambers 224 flows. The exhaust passage 70Ais a space in which the exhaust gas emitted from the combustion chambers 224 flows. The exhaust passageway 70 is a structure including walls and other components that form the space in which the exhaust gas flows.

The exhaust passageway 70 includes a plurality of (in the present embodiment, three) inner exhaust passageways 72 and an outer exhaust passageway 74. These will be described below.

The plurality of inner exhaust passageways 72 are parts of the exhaust passageway 70. The plurality of inner exhaust passageways 72 define inner exhaust passages 32A that are parts of the exhaust passage 70A. Each of the plurality of inner exhaust passageways 72 is constructed by part of the cylinder head 222 of the corresponding cylinder 22. In other words, each of the inner exhaust passages 72A, which are parts of the exhaust passage 70, is formed in the cylinder head 222 of the corresponding cylinder 22. The space defined by each of the inner exhaust passageways 72, that is, the space in which the exhaust gas emitted from each of the combustion chambers 224 flows is connected to the corresponding one of the combustion chambers 224. Thus, the respective inner exhaust passages 72A (which are parts of the exhaust passage 70A) defined by the inner exhaust passageways 72 are connected to the corresponding combustion chambers 224.

A combustion -chamber air outlet 721 is formed on the surface defining the combustion chamber 224 of the cylinder head 222 of each of the plurality of cylinder 22. The combustion-chamber air outlet 721 is formed at the upstream end of the corresponding one of the inner exhaust passageways 72. An air outlet 722 is formed on the outer surface of the cylinder head 222 of each of the cylinders 22. The air outlet 722 is formed at the downstream end of the corresponding one of the inner exhaust passageways 72. Only one combustion-chamber air outlet 721 or alternatively a plurality of combustion-chamber air outlets 721 may be provided for each of the combustion chambers 224. In the present embodiment, only one combustion-chamber air outlet 721 is formed for each of the combustion chambers 224.

An exhaust valve 73 is positioned in each of the inner exhaust passages 72A defined by the respective inner exhaust passageways 72 so as to open and close the corresponding combustion-chamber air outlet 721. Only one exhaust valve 73 is provided for each of the combustion-chamber air outlets 721. In other words, exhaust valves 73 are provided for the combustion-chamber air outlets 721 on a one-to-one basis. As in the case with the intake valves 33, each of the exhaust valves 73 is driven by a valve actuator (not shown) positioned in the cylinder head 222 of the corresponding one of the cylinders 22.

The outer exhaust passageway 74 is a part of the exhaust passageway 70. The outer exhaust passageway 74 defines an outer exhaust passage 74A, which is a part of the exhaust passage 70A. The outer exhaust passageway 74 is connected to each of the plurality of inner exhaust passageways 72. Specifically, the upstream end part of the outer exhaust passageway 74 diverges. For example, the upstream end part of the outer exhaust passageway 74 is formed of branch tubes that are connected to the parts of the cylinder head 222 of each of the plurality of cylinder 22, i.e., to the respective inner exhaust passageways 72.

The outer exhaust passageway 74 includes a plurality of outer branch exhaust passageways 741. The outer branch exhaust passageways 741 are formed in the upstream end part of the outer exhaust passageway 74. Thus, the upstream end part of the outer exhaust passageway 74 diverges into a plurality of outer branch exhaust passageways 741.

The plurality of outer branch exhaust passageways 741 respectively define outer branch exhaust passages 741A. The outer branch exhaust passages 741A are parts of the outer exhaust passage 74A.

The upstream end of each of the outer branch exhaust passageways 741 is connected to the air outlet 722 formed on the outer surface of the cylinder head 222 of the corresponding one of the cylinder heads 22, that is, connected to the part of the cylinder head 222 enclosing the downstream end of the inner exhaust passage 72A formed therein. In other words, the respective upper ends of the outer branch exhaust passages 741A (which are defined by the respective outer branch exhaust passageways 741) are connected to the respective downstream ends of the corresponding inner exhaust passages 72A (which are defined by the respective inner exhaust passageways 72). Thus, the spaces formed by the respective outer branch exhaust passageways 741 are connected to the corresponding spaces formed by the respective inner exhaust passageways 72. This arrangement allows exhaust air to flow from a plurality of inner exhaust passages 72A into the outer exhaust passage 74A.

The outer exhaust passageway 74 includes a muffler 76 and a catalytic section 78. These will be described below.

The muffler 76 reduces noise caused by the flow of the exhaust gas in the exhaust passageway 70. The muffler 76 has an air ejection hole 761 facing the atmosphere. The exhaust gas flowing in the exhaust passageway 70 passes through the catalytic section 78 and thereafter is emitted into the atmosphere through the air ejection hole 761.

The catalytic section 78 includes a main catalyst 781 working as a catalyst. The main catalyst 781 is what is called a three-way catalyst. The main catalyst 781 cleans the exhaust gas exhausted from the combustion chambers 224. Specifically, the exhaust gas from the combustion chambers 224 flows into the catalytic section 78 and is cleaned while passing through the main catalyst 781.

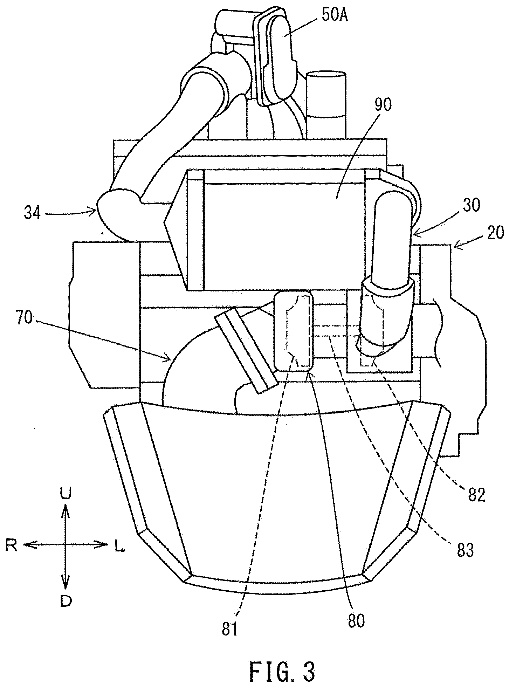

Next, the turbocharger 80 will be described with reference to FIGS. 1, 2 and 3. FIG. 3 is a front view of the engine 20.

The turbocharger 80 is driven by the exhaust gas flowing in the exhaust passageway 70 and compresses the intake air flowing in the intake passageway 30. Specifically, the turbocharger 80 is driven by the exhaust gas flowing in the outer exhaust passageway 74 and compresses the intake air flowing in the outer intake passageway 34.

The turbocharger 80 includes a turbine wheel 81, a compressor wheel 82, and a connecting shaft 83. These will be described below.

The turbine wheel 81 includes a shaft and a plurality of blades. The plurality of blades is arranged on the circumference of the shaft, for example. The plurality of blades is arranged radially, for example.

The turbine wheel 81 is poisoned in the exhaust passageway 70. Specifically, the turbine wheel 81 is positioned in the outer exhaust passageway 74.

The outer exhaust passageway 74 includes a scroll exhaust passageway 74S. The scroll exhaust passageway 74S is formed in such a manner to circle around the turbine wheel 81. The scroll exhaust passageway 74S is positioned upstream from the turbine wheel 81 with respect to the direction of flow of exhaust gas in the outer exhaust passageway 74.

The compressor wheel 82 includes a shaft and a plurality of blades. The plurality of blades is arranged on the circumference of the shaft, for example. The plurality of blades is arranged radially, for example.

The compressor wheel 82 is positioned in the intake passageway 30. Specifically, the compressor wheel 82 is positioned in the outer intake passageway 34.

The compressor wheel 82 is positioned downstream from the air cleaner 40 with respect to the direction of flow of intake air in the outer intake passageway 34. The compressor wheel 82 is positioned upstream from the throttle vale 50 with respect to the direction of flow of intake air in the outer intake passageway 34. Thus, the turbocharger 80 is positioned upstream from the throttle valve 50 with respect to the direction of flow of intake air in the intake passageway 30.

The outer intake passageway 34 includes a scroll intake passageway 34S. The scroll intake passageway 34S is formed in such a manner to circle around the compressor wheel 82. The scroll intake passageway 34S is positioned downstream from the compressor wheel 82 with respect to the direction of flow of intake air in the outer intake passageway 34.

The connecting shaft 83 connects the turbine wheel 81 and the compressor wheel 82. The connecting shaft 83 is supported by a housing 84 in such a manner as to be rotatable around an axis extending in Vehicle-Left-Right Direction. Thus, the turbine wheel 81 and the compressor wheel 82 are rotatable around the central axis of the connecting shaft 83.

Since the turbocharger 80 has the structure above, the exhaust gas flowing in the scroll exhaust passageway 74S blows to the outer periphery of the turbine wheel 81. Thereby, the turbine wheel 81 rotates. The exhaust gas blowing to the outer periphery of the turbine wheel 81 flows out from the turbine wheel 81 in the direction along the central axis of the connecting shaft 83. Along with the rotation of the turbine wheel 81, the compressor wheel 82 rotates. Thereby, the compressor wheel 82 sucks in air in the direction along the central axis of the connecting shaft 83. The compressor wheel 82 compresses the intake air and blows out the compressed air from the periphery. The compressed air blown out from the periphery of the compressor wheel 82 flows into the scroll intake passageway 34S. Thereafter, the compressed air is cooled by the intercooler 90 and supplied to each of the combustion chambers 224. Since each of the combustion chambers 224 is supplied with compressed air, the efficiency of air intake is improved. Accordingly, the output of the engine 20 can be increased.

Next, the intercooler 90 will be described with reference to FIGS. 1, 2 and 3. The intercooler 90 cools the intake air compressed by the turbocharger 80. Thus, the air flowing in the outer intake passageway 34 is cooled by the intercooler 90.

The intercooler 90 is positioned in the outer intake passageway 34. The intercooler 90 is positioned downstream from the compressor wheel 82 of the turbocharger 80 with respect to the direction of flow of intake air in the outer intake passageway 34. In other words, the intercooler 90 is positioned downstream from the turbocharger 80 with respect to the direction of flow of intake air in the outer intake passageway 34. The intercooler 90 is positioned upstream from the throttle valve 50 with respect to the direction of flow of intake air in the outer intake passageway 34. Thus, the intercooler 90 is positioned in the intake passageway 30, between the turbocharger 80 and the throttle valve 50 with respect to the direction of flow of intake air in the intake passageway 30.

The intake air compressed by the compressor wheel 82 of the turbocharger 80 flows into the intercooler 90. The intercooler 90 cools the intake air, of which the temperature was raised by the compression. This heightens the density of air supplied to the engine 20 and improves the efficiency of air intake.

The intercooler 90 is an air-cooled type. The intercooler 90 is positioned at a place that is blown by wind while the straddled vehicle 10 is moving. Accordingly, the intake air flowing in the outer intake passageway 34 is cooled by air blowing to the intercooler while the straddled vehicle 10 is moving.

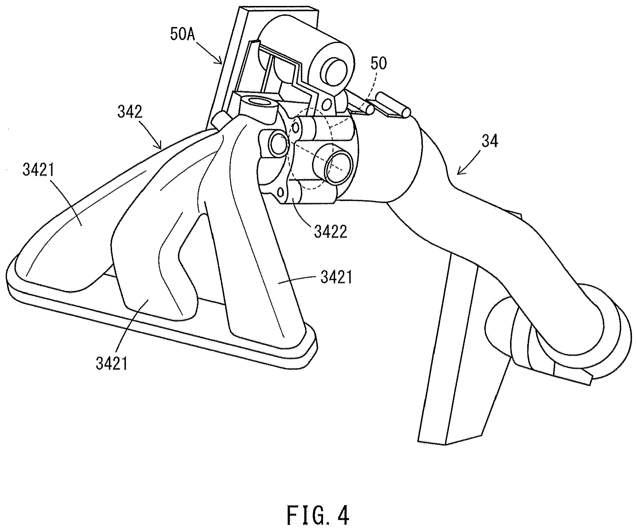

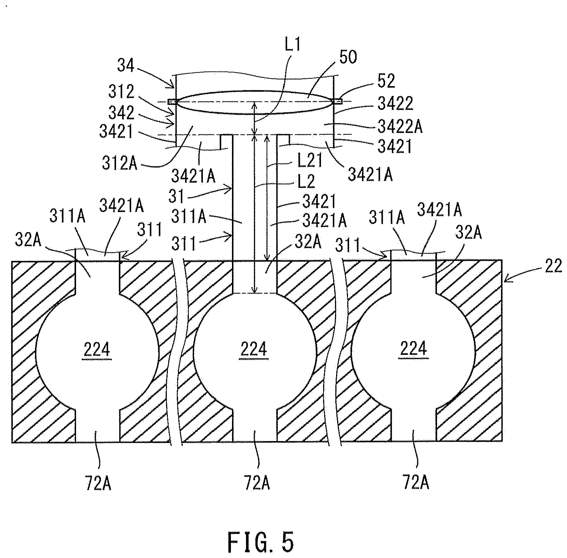

With reference to FIGS. 4 and 5, the outer intake passageway 34 will be described in more detail. FIG. 4 is a perspective view of an outer downstream-side intake passageway 342, which is a part of the outer intake passageway 34 connected to the engine 20. FIG. 5 is a schematic diagram showing the downstream-side intake passageway 31, which is a part of the intake passageway 30, connected to the engine 20.

The outer intake passageway 34 includes the outer downstream-side intake passageway 342. The outer downstream-side intake passageway 342 is positioned downstream from the throttle valve 50 with respect to the direction of flow of intake air in the intake passageway 30. In other words, the upstream end of the outer downstream-side intake passageway 342 is at the place where the throttle valve 50 is positioned. In the present embodiment, the outer downstream-side intake passageway 342 is constructed by part of the throttle body 50A containing the throttle valve 50.

The outer downstream-side intake passageway 342 includes a plurality of outer downstream-side branch intake passageways 3421 and one single outer downstream-side common intake passageway 3422. These will be described below.

The plurality of outer downstream-side branch intake passageways 3421 are provided for the plurality of combustion chambers 224 on a one-to-one basis. Each of the plurality of outer downstream-side branch intake passageways 3421 is connected to the corresponding one of the inner intake passageways 32. Specifically, the downstream end of each of the outer downstream-side branch intake passageways 3421 is connected to the upstream end of the corresponding one of the inner intake passageways 32, i.e., to the air-inlet-322-enclosing part of the outer surface of the corresponding cylinder head 222.

The outer downstream-side branch intake passageways 3421 respectively define outer downstream-side branch intake passages 3421A. Each of the outer downstream-side branch intake passages 3421A is connected to the inner intake passage 32A defined by the corresponding one of the inner intake passageways 32. Specifically, the downstream ends of each of the outer downstream-side branch intake passages 3421A is connected to the upstream end of the corresponding one of the inner intake passages 32A. Thus, the spaces formed by the respective outer downstream-side branch intake passageways 3421 are connected to the corresponding spaces formed by the respective inner intake passageways 32. This allows the intake air to flow from the respective outer downstream-side branch intake passages 3421A into the corresponding inner intake passages 32A.

Thus, in the present embodiment, a plurality of branch intake passageways 311 is realized by the plurality of outer downstream-side branch intake passageways 3421 and the plurality of inner intake passageways 32. Accordingly, a plurality of branch intake passages 311A is realized by the plurality of outer downstream-side branch intake passages 3421A and the plurality of inner intake passages 32A. As described above, in the present embodiment, the plurality of branch intake passages 311A respectively lead to the corresponding combustion chambers 224.

The single outer downstream-side common intake passageway 3422 is connected to each of the outer downstream-side intake branch passageways 3421 for a flow of intake air in the intake passageway 30. Specifically, the downstream end of the single outer downstream-side common intake passageway 3422 is connected to the respective upstream ends of the outer downstream-side branch intake passageways 3421.

The upstream end of the single outer downstream-side common intake passageway 3422 is at the place where the throttle valve 50 is positioned. Thus, the upstream end of the outer downstream-side common intake passageway 3422 is the same as the upstream end of the outer downstream-side intake passageway 342.

The single outer downstream-side common intake passageway 3422 defines a single outer downstream-side common intake passage 3422A. The single outer downstream-side common intake passage 3422A is connected to each of the outer downstream-side branch intake passages 3421A.

Thus, in the present embodiment, a single common intake passageway 312 is realized by the single outer downstream-side common intake passageway 3422. A single common intake passage 312Ais realized by the single outer downstream-side common intake passage 3422A.

As described above, in the present embodiment, the downstream-side intake passageway 31 is realized by the outer downstream-side intake passageway 342 and the plurality of inner intake passageways 32. Accordingly, a downstream-side intake passageway 31Ais realized by the air passage defined by the outer downstream-side intake passageway 342, namely, the single outer downstream-side common intake passage 3422A and the plurality of branch intake passages 311A.

The inner volume of the common intake passageway 312 is smaller than the total inner volume of the plurality of branch intake passageways 311. In the present embodiment, the inner volume of the common intake passageway 312 is smaller than the average inner volume of the plurality of branch intake passageways 311. In the present embodiment, especially, the inner volume of the common intake passageway 312 is smaller than the smallest inner volume of those of the plurality of branch intake passageways 311. When the plurality of branch intake passageways 311 have the same inner volume, the inner volume of each of the branch intake passageways 311 is considered as the smallest inner volume.

The inner volume of the common intake passageway 312 means the size of the space in which the intake air flows in the common intake passageway 312, that is, the size of the common intake passage 312A defined by the common intake passageway 312. The inner volume of each of the plurality of branch intake passageways 311 means the size of the space in which the intake air flows in each of the branch intake passageways 311, that is, the size of each of the branch intake passages 311A defined by the respective branch intake passageways 311.

In the present embodiment, the length L1 of the common intake passage 312A is smaller than the length L2 of any of the plurality of branch intake passages 311A. In the present embodiment, accordingly, the length L1 of the common intake passage 312Ais smaller than the average of the lengths L2 of the plurality of branch intake passages 311A. In the present embodiment, especially, the length L1 of the common intake passage 312Ais smaller than the smallest length of the lengths L2 of the plurality of branch intake passages 311A. When the plurality of branch intake passages 311A have the same length L2, the length of each of the branch intake passages 311A is considered as the smallest length.

In the present embodiment, the length L1 of the common intake passage 312Ais smaller than the length L21 of any of the outer downstream-side branch intake passages 3421A. In the present embodiment, accordingly, the length L1 of the common intake passage 312Ais smaller than the average of the lengths L21 of the plurality of the outer downstream-side branch intake passages 3421A. In the present embodiment, especially, the length L1 of the common intake passage 312A is smaller than the smallest length of the lengths L21 of the plurality of the outer downstream-side branch intake passages 3421A. When the plurality of the outer downstream-side branch intake passages 3421A have the same length L21, the length of each of the outer downstream-side branch intake passages 3421A is considered as the smallest length.

The length L1 of the common intake passage 312Ais the length of the line extending from the upstream end to the downstream end of the common intake passage 312A defined by the common intake passageway 312 and passing through the centers of cross sections of space of the common intake passageway 312. The upstream end of the common intake passage 312Ais at the position where the rotation axis of the throttle valve 50 passes. The downstream end of the common intake passage 312A is at the place where the one of the respective upstream ends of the plurality of branch intake passages 311A that is located most downstream with respect to the direction of flow of intake air exists. A cross section of space of the common intake passageway 312 means an area inside the common intake passageway 312 when the common intake passageway 312 is cut in a direction perpendicular to the direction of flow of intake air therein, that is, an open area of a cross section of the common intake passageway 312.

The length L2 of each of the branch intake passages 311A is a length of the line extending from the upstream end to the downstream end of the branch intake passage 311A defined by the corresponding branch intake passageway 311 and passing through the centers of cross sections of space of the branch intake passageway 311. The upstream end of the branch intake passage 311A is the boundary between the branch intake passage 311A and the common intake passage 312A. The downstream end of the branch intake passage 311A is the boundary between the branch intake passage 311A and the corresponding combustion chamber 224. A cross section of space of the branch intake passageway 311 means an area inside the branch intake passageway 311 when the branch intake passageway 311 is cut in a direction perpendicular to the direction of flow of intake air therein, that is, an open area of a cross section of the branch intake passageway 311.

In the present embodiment, the plurality of branch intake passageways 311 have the same length respectively. Additionally, the plurality of branch intake passageways 311 have the same cross-sectional area of space respectively. Accordingly, in the present embodiment, the plurality of branch intake passageways 311 have the same inner volume respectively. In the present embodiment, the inner volume of the common intake passageway 312 is smaller than the inner volume of any of the branch intake passageways 311.

In the straddled vehicle 10, the inner volume of the downstream-side intake passageway 31, and especially the inner volume of the single common intake passageway 312 can be reduced. Therefore, in the straddled vehicle 10, the response characteristics of the engine 20 to operation of the acceleration operator 19 can be improved.

### Examples

Regarding the straddled vehicle according to the present embodiment (present teaching example example), the response characteristics of the engine in the non-supercharging region to operation of the acceleration operator were examined. For comparison, regarding a straddled vehicle including a plurality of combustion chambers in which a plurality of throttle valves is provided for the plurality of combustion chambers on a one-to-one basis (comparative example), the response characteristics of the engine in the non-supercharging region to operation of the acceleration operator were examined.

In the examinations, the engine speed was fixed to 3200 rpm. The wastegate valve was fixed at the full-open position. The VCT (variable camshaft timing) was fixed to the lock position. The IMEP (indicated mean effective pressure) was measured from 1 bar until the time when the throttle valve became fully open.

In the present teaching example, the intake volume (the inner volume from the position of the throttle valve to the downstream end) was 782 cc. The diameter of the throttle valve was 45 mm. The maximum open area at the time when the throttle valve was fully open was 1144 mm².

In the comparative example, the intake volume (the inner volume from the position of the throttle valve to the downstream end) was 174 cc. The diameter of the throttle valve was 35 mm. The maximum open area at the time when the throttle valve was fully open was 617 mm².

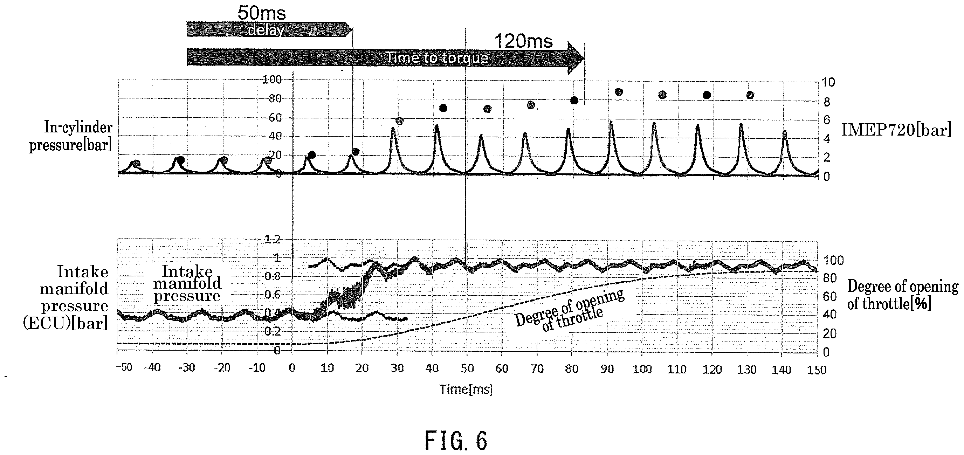

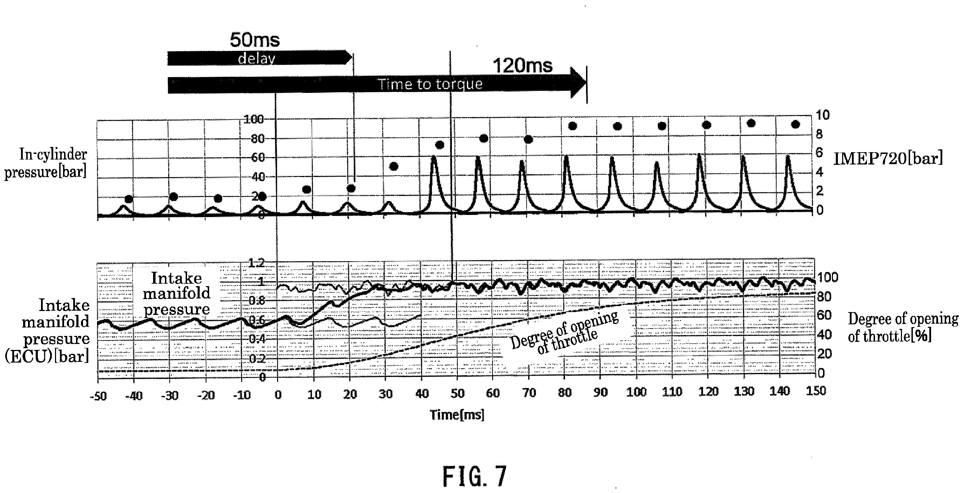

FIGS. 6 and 7 show the results of the examinations. FIG. 6 shows the results of the examination in the present teaching example. FIG. 7 shows the results of the examination in the comparative example.

As is clear from FIGS. 6 and 7, the engine of the present teaching example had better response characteristics in the non-supercharging region to operation of the acceleration operator than the engine of the comparative example.

### (Other Embodiments)

In the paragraphs above, a straddled vehicle that has an engine with three combustion chambers has been described as an embodiment. However, the number of combustion chambers contained in the engine may be two or may be four or more.

In the embodiment described above, an injector is positioned in each of the cylinder heads. Alternatively, an injector may be positioned in the outer intake passageway.

In the embodiment described above, an injector is used as a fuel supply device. However, instead of the injector, a carburetor may be used.

In the embodiment described above, a turbocharger is used as a supercharger. However, instead of the turbocharger, a mechanical supercharger may be used.

In the embodiment described above, a bypath intake passageway may be connected to the outer intake passageway 34 so that the intake passageway can circumvents the compressor wheel. In this case, a blow-off valve is provided in the bypath intake passageway. The blow-off valve is used to adjust the amount of air supplied to the engine 20. The blow-off valve is, for example, an electromagnetic valve.

The straddled vehicle of the above-described embodiment may further include a wastegate valve.

In the embodiment described above, the plurality of branch intake passageways 311 have the same length. However, the plurality of branch intake passageways 311 may have different lengths.

In the embodiment described above, the plurality of branch intake passageways 311 have the same inner volume. However, the plurality of branch intake passageways 311 may have different inner volumes.

In the embodiment described above, the plurality of branch intake passageways 311 have the same length and the same cross-sectional area of space, and accordingly, have the same inner volume. However, even if the plurality of branch intake passageways 311 have different lengths and different cross-sectional areas of space, the plurality of branch intake passageways 311 may have the same inner volume.

### Reference Signs List

10: straddled vehicle
20: engine
224: combustion chamber
30: intake passageway
31: downstream-side intake passageway
31A: downstream-side intake passage
311: branch intake passageway
311A: branch intake passage
312: common intake passageway
312A: common intake passage
30A: intake passage
32: inner intake passageway
32A: inner intake passage
34: outer intake passageway
34A: outer intake passage
342: outer downstream-side intake passageway
3421: outer downstream-side branch intake passageway
3421A: outer downstream-side branch intake passage
3422: outer downstream-side common intake passageway
3422A: outer downstream-side common intake passage
50: throttle valve
50A: throttle body
52: rotation shaft
80: turbocharger
90: intercooler

## Claims

1. A straddled vehicle (10) comprising:
an engine (20) including a plurality of combustion chambers (224);
a supercharger (80);
an intake passageway (30) that defines an intake passage (30A) in which intake air sucked in from atmosphere may flow to each of the plurality of combustion chambers (224); and
a throttle valve (50) positioned in the intake passageway (30),
wherein:
the supercharger (80) is positioned upstream from the throttle valve (50) with respect to a direction of flow of intake air in the intake passageway (30);
the intake passageway (30) includes a downstream-side intake passageway (31) that is positioned downstream from the throttle valve (50) with respect to the direction of flow of intake air in the intake passageway (30);
the downstream-side intake passageway (31) includes:
a plurality of branch intake passageways (311) that are provided for the plurality of combustion chambers (224) on a one-to-one basis in such a manner that branch intake passages (311A) defined by the respective branch intake passageways (311) lead to the corresponding combustion chambers (224); **characterized in that**, the downstream side intake passageway (31) further includes:
a single common intake passageway (312) that is connected to the respective upstream ends of the plurality of branch intake passageways (311) with respect to the direction of flow of intake air in the intake passageway (30) in such a manner that a single common intake passage (312A) defined by the common intake passageway (312) leads to each of the branch intake passages (311A) defined by the respective branch intake passageways (311);
the upstream end of the common intake passageway (312) is at a place where the throttle valve (50) is positioned; and
the inner volume of the common intake passageway (312) is smaller than the total inner volume of the plurality of branch intake passageways (311).

2. The straddled vehicle (10) according to claim 1, wherein the length of the common intake passageway (312) is smaller than the length of any of the branch intake passageways (311).

3. The straddled vehicle (10) according to any one claim 1 or 2, further comprising an intercooler (90) positioned in the intake passageway (30), between the supercharger (80) and the throttle valve (50) with respect to the direction of flow of intake air in the intake passageway (30).

4. A straddled vehicle (10) according to any one of claims 1 to 3, wherein the plurality of branch intake passageways (311) has a same length.

## Patentansprüche

1. Ein Spreizsitzfahrzeug (10), das folgende Merkmale aufweist:
eine Maschine (20), die eine Mehrzahl von Verbrennungskammern (224) umfasst;
einen Lader (80);
einen Einlassdurchgang (30), der einen Einlassdurchlass (30A) definiert, durch den aus der Umgebung aufgenommene Einlassluft zu jeder der Mehrzahl von Verbrennungskammern (224) strömen kann;
ein Drosselventil (50), das sich in dem Einlassdurchgang (30) befindet,
wobei:
der Lader (80) sich hinsichtlich einer Strömungsrichtung der Einlassluft in dem Einlassdurchgang (30) stromaufwärts des Drosselventils (50) befindet;
der Einlassdurchgang (30) einen stromabwärtsseitigen Einlassdurchgang (31) umfasst, der sich hinsichtlich der Strömungsrichtung der Einlassluft in dem Einlassdurchgang (30) stromabwärts des Drosselventils (50) befindet;
der stromabwärtsseitige Einlassdurchgang (31) folgende Merkmale umfasst:
eine Mehrzahl von Verzweigungseinlassdurchgängen (311), die für die Mehrzahl von Verbrennungskammern (224) auf einer Eins-zu-Eins-Basis derart vorgesehen sind, dass Verzweigungseinlassdurchlässe (311A), die von den jeweiligen Verzweigungseinlassdurchgängen (311) definiert sind, zu den entsprechenden Verbrennungskammern (224) führen;
**dadurch gekennzeichnet, dass** der stromabwärtsseitige Einlassdurchgang (31) ferner folgende Merkmale aufweist:
einen einzelnen gemeinsamen Einlassdurchgang (312), der mit den jeweiligen hinsichtlich der Strömungsrichtung der Einlassluft in dem Einlassdurchgang (30) stromaufwärts gelegenen Enden der Mehrzahl von Verzweigungseinlassdurchgängen (311) derart verbunden ist, dass ein einzelner gemeinsamer Einlassdurchlass (312A), der von den gemeinsamen Einlassdurchgang (312) definiert ist, zu jedem der Verzweigungseinlassdurchlässe (311A) führt, die von den jeweiligen Verzweigungseinlassdurchgängen (311) definiert sind;
sich das stromaufwärts gelegene Ende des gemeinsamen Einlassdurchgangs (312) an einem Ort befindet, wo sich das Drosselventil (50) befindet; und
das Innenvolumen des gemeinsamen Einlassdurchgangs (312) kleiner als das Gesamtinnenvolumen der Mehrzahl von Verzweigungseinlassdurchgängen (311) ist.

2. Das Spreizsitzfahrzeug (10) gemäß Anspruch 1, bei dem die Länge des gemeinsamen Einlassdurchgangs (312) kleiner als die Länge von jedem der Verzweigungseinlassdurchgänge (311) ist.

3. Das Spreizsitzfahrzeug (10) gemäß einem der Ansprüche 1 oder 2, das ferner einen Zwischenkühler (90) aufweist, der sich in dem Einlassdurchgang (30), hinsichtlich der Strömungsrichtung der Einlassluft in dem Einlassdurchgang (30), zwischen dem Lader (80) und dem Drosselventil (50) befindet.

4. Ein Spreizsitzfahrzeug (10) gemäß einem der Ansprüche 1 bis 3, bei dem die Mehrzahl von Verzweigungsdurchgängen (311) eine gleiche Länge aufweist.

## Revendications

1. Véhicule de type à selle (10) comprenant:
un moteur (20) comportant une pluralité de chambres de combustion (224);
un compresseur (80);
un passage d'admission (30) qui définit un passage d'admission (30A) dans lequel l'air d'admission aspiré de l'atmosphère peut circuler vers chacune de la pluralité de chambres de combustion (224); et
une soupape d'étranglement (50) positionnée dans le passage d'admission (30),
dans lequel:
le compresseur (80) est positionné en amont de la soupape d'étranglement (50) par rapport à une direction de circulation de l'air d'admission dans le passage d'admission (30);
le passage d'admission (30) comporte un passage d'admission du côté aval (31) qui est positionné en aval de la soupape d'étranglement (50) par rapport à la direction de circulation de l'air d'admission dans le passage d'admission (30);
le passage d'admission du côté aval (31) comporte:
une pluralité de passages d'admission de dérivation (311) qui sont prévus pour la pluralité de chambres de combustion (224) sur une base individuelle de sorte que les passages d'admission de dérivation (311A) définis par les passages d'admission de dérivation respectifs (311) conduisent aux chambres de combustion correspondantes (224);
**caractérisé par le fait que** le passage d'admission du côté aval (31) comporte par ailleurs:
un seul passage d'admission commun (312) qui est connecté aux extrémités amont respectives de la pluralité de passages d'admission de dérivation (311) par rapport à la direction de circulation de l'air d'admission dans le passage d'admission (30) de sorte qu'un seul passage d'admission commun (312A) défini par le passage d'admission commun (312) conduise à chacun des passages d'admission de dérivation (311A) définis par les passages d'admission de dérivation respectifs (311);
l'extrémité amont du passage d'admission commun (312) se situe à un endroit où est positionnée la soupape d'étranglement (50); et
le volume intérieur du passage d'admission commun (312) est plus petit que le volume intérieur total de la pluralité de passages d'admission de dérivation (311).

2. Véhicule de type à selle (10) selon la revendication 1, dans lequel la longueur du passage d'admission commun (312) est inférieure à la longueur de l'un quelconque des passages d'admission de dérivation (311).

3. Véhicule de type à selle (10) selon l'une quelconque des revendications 1 ou 2, comprenant par ailleurs un refroidisseur (90) positionné dans le passage d'admission (30), entre le compresseur (80) et la soupape d'étranglement (50) par rapport à la direction de circulation de l'air d'admission dans le passage d'admission (30).

4. Véhicule de type à selle (10) selon l'une quelconque des revendications 1 à 3, dans lequel la pluralité de passages d'admission de dérivation (311) présentent une même longueur.
